(19) Europäisches Patentamt European Patent Office Office européen des brevets

(11) **EP 4 682 367 A1**

(12) **EUROPEAN PATENT APPLICATION**

(43) Date of publication:
**21.01.2026 Bulletin 2026/04**

(21) Application number: **25189735.1**

(22) Date of filing: **15.07.2025**

(51) International Patent Classification (IPC):
**F02C 9/28** (2006.01)    **F02C 9/46** (2006.01)

(52) Cooperative Patent Classification (CPC):
**F02C 9/28; F02C 9/46;** F05D 2270/101

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **15.07.2024 US 202418773272**

(71) Applicant: **PRATT & WHITNEY CANADA CORP.**
**Longueuil, Québec J4G 1A1 (CA)**

(72) Inventor: **DURANLEAU-HENDRICKX, Louis**
**(01BE5) Longueuil, J4G 1A1 (CA)**

(74) Representative: **Dehns**
**10 Old Bailey**
**London EC4M 7NG (GB)**

(54) **RELATIVE FUEL RATIO UNIT LIMITER FOR GAS TURBINE SURGE RECOVERY**

(57)    A method includes monitoring a fuel ratio unit (RU) (306) of a gas turbine engine (102a, 102b) over time, where the RU (306) is a ratio of a fuel flow (304) to a compressor discharge pressure (302) during operation of the gas turbine engine (102a, 102b). The method also includes storing the RU (306) in a memory. The method further includes, in response to identifying a surge detection time (308) at which an engine surge is detected, retrieving, from the memory, a pre-surge RU (320) before the surge detection time (308), where the pre-surge RU (320) corresponds to a pre-surge time (330). The method also includes determining a relative RU limit (350) based on the pre-surge RU (320) such that the relative RU limit (350) is less than the pre-surge RU (320) by at least a bias value (360). In addition, the method includes limiting the fuel flow (304) to the relative RU limit (350) for a duration (410) of the detected engine surge.

FIG. 3

**Description**

TECHNICAL FIELD

This disclosure relates generally to gas turbine engines. More specifically, this disclosure relates to a relative fuel ratio unit limiter for gas turbine surge recovery.

BACKGROUND

Gas turbine engines are at risk of compressor surge (also referred to as engine surge), which includes airflow breakdown and possible airflow reversal following a flow instability. Compressor surge may be caused by a multitude of factors, such as transient maneuvers, inlet distortion, engine deterioration, etc. While surge avoidance (by carefully scheduling control governing and limits) is considered during design, it is still desirable for a gas turbine engine to include a surge recovery (also referred as surge accommodation) mechanism to help the engine to recover from a surge if one happens.

SUMMARY

This disclosure relates to a relative fuel ratio unit limiter for gas turbine surge recovery.

In a first embodiment, a method includes monitoring a fuel ratio unit (RU) of a gas turbine engine over time, where the RU is a ratio of a fuel flow to a compressor discharge pressure during operation of the gas turbine engine. The method also includes storing the RU in a memory. The method further includes, in response to identifying a surge detection time at which an engine surge is detected, retrieving, from the memory, a pre-surge RU before the surge detection time, where the pre-surge RU corresponds to a pre-surge time. The method also includes determining a relative RU limit based on the pre-surge RU such that the relative RU limit is less than the pre-surge RU by at least a bias value. In addition, the method includes limiting the fuel flow to the relative RU limit for a duration of the detected engine surge.

In a second embodiment, a non-transitory machine-readable medium includes instructions that when executed cause at least one processor to monitor a fuel RU of a gas turbine engine over time, where the RU is a ratio of a fuel flow to a compressor discharge pressure during operation of the gas turbine engine. The non-transitory machine-readable medium also includes instructions that when executed cause the at least one processor to store the RU in a memory. The non-transitory machine-readable medium further includes instructions that when executed cause the at least one processor, in response to identifying a surge detection time at which an engine surge is detected, to retrieve, from the memory, a pre-surge RU before the surge detection time, where the pre-surge RU corresponds to a pre-surge time. The non-transitory machine-readable medium also includes instructions that when executed cause the at least one processor to determine a relative RU limit based on the pre-surge RU such that the relative RU limit is less than the pre-surge RU by at least a bias value. In addition, the non-transitory machine-readable medium includes instructions that when executed cause the at least one processor to limit the fuel flow to the relative RU limit for a duration of the detected engine surge.

In a third embodiment, an apparatus includes a memory and at least one processor. The at least one processor is configured to monitor a fuel RU of a gas turbine engine over time, where the RU is a ratio of a fuel flow to a compressor discharge pressure during operation of the gas turbine engine. The at least one processor is also configured to store the RU in the memory. The at least one processor is further configured, in response to identifying a surge detection time at which an engine surge is detected, to retrieve, from the memory, a pre-surge RU before the surge detection time, where the pre-surge RU corresponds to a pre-surge time. The at least one processor is also configured to determine a relative RU limit based on the pre-surge RU such that the relative RU limit is less than the pre-surge RU by at least a bias value. In addition, the at least one processor is configured to limit the fuel flow to the relative RU limit for a duration of the detected engine surge.

Any single one or any combination of the following features may be used with the first, second, or third embodiment. Multiple samples of pre-surge RUs that respectively correspond to multiple pre-surge times before the surge detection time may be retrieved. The pre-surge RU may be calculated as a rolling average of the multiple samples of the pre-surge RUs.

The relative RU limit may be redetermined based on the pre-surge RU and a second bias value in response to a determination that the engine surge continues after an expected surge recovery duration following the surge detection time. The redetermined relative RU limit may be less than the pre-surge RU by at least the second bias value.

A severity of engine surge may be assigned to the engine surge based on a rate of change of the monitored RU such that the severity of engine surge may be a lesser severity based on a lower rate of change of the monitored RU or a greater severity based on a higher rate of change of the monitored RU. The bias value may be a function of the assigned severity that increases with the greater severity and decreases with the lesser severity.

The relative RU limit may be enabled for the duration of the detected engine surge. While the relative RU limit is enabled, the fuel flow may be limited to the relative RU limit based on the pre-surge RU. The relative RU limit may be disabled when the engine surge is no longer detected. The fuel flow may be limited to a nominal RU limit while the relative RU limit is disabled. An upper limit of the nominal RU limit may be selected from among a first upper limit and a second upper limit different from the first upper limit. The first upper limit may be based on the gas turbine engine, the second upper limit may be compatible with and based on multiple gas turbine engines including different types of gas turbine compressors, and the different types of gas turbine compressors may include at least one from among axial compressor, centrifugal compressor, and mixed-flow compressor.

Based on the monitored RU, a steady-state RU corresponding to a steady-state power output from the gas turbine engine may be determined. A lower limit may be applied to the relative RU limit. The lower limit may include the steady-state RU, thereby preventing the gas turbine engine from reducing power output below the steady-state power for the duration of the detected engine surge.

An electronic engine controller (EEC) of the gas turbine engine may be used to monitor the RU, store the RU in the memory, retrieve the pre-surge RU from the memory, determine the relative RU limit, and limit the fuel flow to the relative RU limit. The EEC may include at least one of: a full authority digital engine controller (FADEC) or a non-FADEC single channel engine controller.

The fuel flow and the compressor discharge pressure may be measured by sensors during operation of the gas turbine engine.

The fuel flow and the compressor discharge pressure may include synthesized values from simulated operation of an on-board model of the gas turbine engine.

The bias value may be a function of at least one of: an environment measurement or an engine operating condition. The environment measurement may include at least one of: altitude, airspeed, or ambient temperature. The engine operating condition may include at least one of: starting mode, low-power mode, or high-power mode. The bias value may be selected from a look-up table that includes multiple bias values corresponding to predetermined values of the environment measurement and the engine operating condition.

The bias value may be zero such that the relative RU limit is equivalent to the pre-surge RU.

The at least one processor is further configured to redetermine the relative RU limit based on the pre-surge RU and a second bias value in response to a determination that the engine surge continues after an expected surge recovery duration following the surge detection time. The redetermined relative RU limit is less than the pre-surge RU by at least the second bias value.

The at least one processor is further configured to assign a severity of engine surge to the engine surge based on a rate of change of the monitored RU such that the severity of engine surge is a lesser severity based on a lower rate of change of the monitored RU or a greater severity based on a higher rate of change of the monitored RU. The bias value is a function of the assigned severity that increases with the greater severity.

Other technical features may be readily apparent to one skilled in the art from the following figures, descriptions, and claims.

BRIEF DESCRIPTION OF THE DRAWINGS

For a more complete understanding of this disclosure and its advantages, reference is now made to the following description taken in conjunction with the accompanying drawings, in which like reference numerals represent like parts:

FIG. 1 illustrates an example aircraft supporting a relative fuel ratio unit limiter for gas turbine surge recovery according to this disclosure;

FIG. 2 illustrates compressor discharge pressure, fuel flow, and corresponding fuel ratio units monitored during operation of a gas turbine engine that performs a typical engine response during an engine surge according to previous RU surge recovery methods;

FIG. 3 illustrates compressor discharge pressure, fuel flow, and corresponding fuel ratio units monitored during operation of a gas turbine engine that includes a relative fuel ratio unit limiter for gas turbine surge recovery during an engine surge according to embodiments of this disclosure;

FIG. 4 illustrates disabling the relative RU limit after a duration of time according to embodiments of this disclosure;

FIG. 5 illustrates a method for a relative fuel ratio unit limiter for gas turbine surge recovery according to embodiments of this disclosure; and

FIG. 6 illustrates an example computing device or system supporting a relative fuel ratio unit limiter for gas turbine surge recovery, according to this disclosure.

DETAILED DESCRIPTION

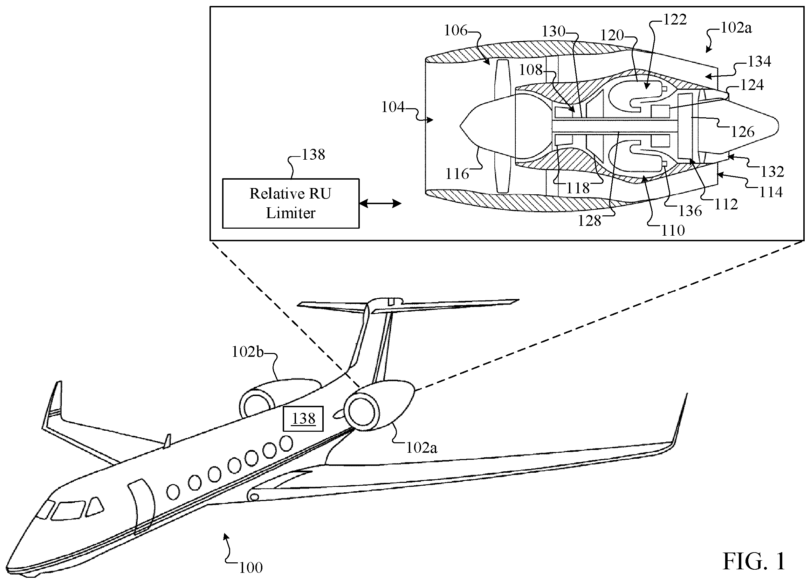

FIGURES 1 through 6, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

Gas turbine engines are at risk of compressor surge (also referred to as engine surge), which includes airflow breakdown and possible airflow reversal following a flow instability. Compressor surge may be caused by a multitude of factors, such as transient maneuvers, inlet distortion, engine deterioration, etc. While surge avoidance (by carefully scheduling control governing and limits) is considered during design, it is still desirable for a gas turbine engine to include a surge recovery (also referred as surge accommodation) mechanism to help the engine to recover from a surge if one happens. Some gas turbine engines use a fuel ratio unit (RU) to detect an engine surge and to detect surge recovery. RU is used in some legacy hydromechanical engine control techniques as an acceleration/deceleration limiter through bellows and metering windows. RU is also used with some full authority digital engine control (FADEC) engines because the RU has usefulness for some surge recovery logics.

This disclosure provides a relative fuel RU limiter for gas turbine surge recovery, which is an improvement over the previous RU surge recovery techniques. In some embodiments, a fuel RU is defined as follows.

$$RU = \frac{Wf}{P3} \hspace{3cm} (1)$$

Here, *Wf* denotes the engine fuel flow and P3 denotes the compressor discharge pressure. The compressor discharge pressure can be referred to as the "station 3" pressure, the pressure at an intermediate (I.S.) location between a compressor and a combustion chamber, or the pressure of the latest of the compressor's stations. The compressor discharge pressure can also be denoted as P*b,* which refers to combustor burner pressure. The compressor discharge pressure can be the discharge pressure of different types of gas turbine compressors, such as an axial compressor, centrifugal compressor, or mixed-flow compressor. In some cases, the engine fuel flow is measured in pounds per hour (pph), the compressor discharge pressure is measured in pounds per square inch absolute (psia), and the RU is measured in pph/psia.

FIG. 1 illustrates an example aircraft 100 supporting a relative fuel ratio unit limiter for gas turbine surge recovery according to this disclosure. As shown in FIG. 1, the aircraft 100 represents an airplane having multiple engines 102a-102b, where at least one engine 102a is positioned on one side of the aircraft 100 and at least one engine 102b is positioned on the opposite side of the aircraft 100. Note that the form of the aircraft 100 shown in FIG. 1 is for illustration only and that the aircraft 100 may have any other suitable form. As one example, the engines 102a-102b of the aircraft 100 may be positioned on the wings of the aircraft 100 rather than towards the rear of the aircraft 100. As another example, while the aircraft 100 in this example has two engines 102a-102b, the aircraft 100 may have other numbers of engines, such as when two or more engines are positioned on each side of the aircraft 100. As noted above, the aircraft 100 can suffer from engine surge if a compressor of one of the engines 102a-102b experiences compressor airflow breakdown, or airflow reversal following a flow instability, or other rapid reduction of compressor discharge pressure.

As shown in FIG. 1, each engine 102a-102b includes various components used to create thrust for moving the aircraft 100. In this example, each engine 102a-102b can include an inlet 104, a fan section 106, a compressor section 108, a combustion section 110, a turbine section 112, and an exhaust 114. The inlet 104 generally includes an opening that allows air to be drawn into the engine 102a-102b. The fan section 106 includes a fan rotor 116, and the compressor section 108 includes a compressor rotor 118. The combustion section 110 includes an annular combustor 120 having a combustion chamber 122. The turbine section 112 includes a high pressure turbine (HPT) rotor 124 and a low pressure turbine (LPT) rotor 126. Each rotor 116, 124, 126 typically includes rotor blades arranged circumferentially around and connected to one or more respective rotor disks. The fan rotor 116 is connected to the LPT rotor 126 through a low-speed shaft 128, and the compressor rotor 118 is connected to the HPT rotor 124 through a high-speed shaft 130. The low-speed shaft 128 can extend through a bore of the high-speed shaft 130 between the fan rotor 116 and the LPT rotor 126.

During operation, air enters each engine 102a-102b through the inlet 104, and the air is directed through the fan section 106 into a core flow path 132 and a bypass flow path 134. The core flow path 132 extends sequentially through the sections 108-112 of the engine 102a-102b, which are often referred to as an "engine core." The air within the core flow path 132 may often be referred to as "core air." The bypass flow path 134 extends through a bypass duct, which bypasses the engine core. The air within the bypass flow path 134 may often be referred to as "bypass air." The core air is compressed by the compressor rotor 118 and directed into the combustion chamber 122 of the combustor 120. Fuel is injected into the combustion chamber 122 via one or more fuel injectors 136 and mixed with the compressed core air to provide a fuel-air mixture. The fuel-air mixture is ignited, and the resulting combustion products flow through and sequentially cause the HPT rotor 124 and the LPT rotor 126 to rotate. Rotation of the HPT rotor 124 drives rotation of the compressor rotor 118 and thereby causes compression of air received from the inlet 104 into the core flow path 132. Rotation of the LPT rotor 126 drives rotation of the fan rotor 116, which propels bypass air through and out of the bypass flow path 134. The propulsion of the bypass air can account for a significant portion (such as a majority) of the thrust generated by the engine 102a-102b.

Note that this represents a brief description of one example type of engine 102a-102b that may be used on an aircraft 100. Additional details of this type of engine 102a-102b are known to people skilled in the relevant art and are omitted here for brevity. Also note that the example engine 102a-102b shown here represents a turbofan engine, which is one type of engine 102a-102b that may be used on the aircraft 100. However, any other suitable type of engine now known or later developed may be used with the aircraft 100. As particular examples, the engines 102a-102b of the aircraft 100 may represent turbofan engines, turbojet engines, turboprop engines, or turboshaft engines.

As described in more detail below, the engines 102a-102b can be associated with a with an RU limiter, such as the relative fuel ratio unit (RFRU) limiter 138 for gas turbine surge recovery according to embodiments of this disclosure. One value used to control engines 102a-102b of an aircraft 100 is the RU, which is a ratio of $Wf$ to P3. The RFRU limiter 138 can monitor the engines 102a-102b in order to identify that an engine surge is detected, and the RFRU limiter 138 can adjust operation of the engines 102a-102b by enabling a relative RU limit to be used to recover from (such as accommodate for) the engine surge. The relative RU limit is calculated based on the monitored RU within the engine that is experiencing the engine surge at a current time, unlike a nominal RU limit that is pre-determined based on an expected operation of different types of engines having different types of sensors than each other. By modifying the engines 102a-102b based on a relative RU limit (and not a nominal RU limit) during an engine surge, the RFRU limiter 138 can reduce or eliminate the problems associated with sensor inaccuracies, engine-to-engine variability among engines of the same type, engine-to-engine variability among engines that are different types than each other, or other stack-up inaccuracies that all need to be considered in a nominal pre-determined RU limit.

As described below, the RFRU limiter 138 can be configured to perform these functions for applying a relative RU limit only when a specified set of conditions is satisfied. The set of conditions can indicate that the aircraft 100 is currently operating under one or more conditions in which compressor surge may be problematic. This allows the relative RU limit described below to only be applied selectively and allows the relative RU limit to be disabled under a non-surge condition.

The RFRU limiter 138 includes any suitable hardware or any suitable combination of hardware and software/firmware configured to perform gas turbine surge recovery. For example, RFRU limiter 138 may be implemented using one or more processing devices, such as one or more microprocessors, microcontrollers, digital signal processors (DSPs), application specific integrated circuits (ASICs), field programmable gate arrays (FPGAs), or discrete circuitry. Note that while a centralized RFRU limiter 138 that can perform gas turbine surge recovery operations for multiple engines 102a-102b is shown in FIG. 1, it is possible to have separate RFRU limiters for the respective multiple engines. This disclosure does not limit the RFRU limiter 138 to any particular computing device or system. As a particular example, the RFRU limiter 138 may form part of or be included in an electronic engine controls (EEC) system or a flight management system (FMS) of the aircraft 100. In some embodiments, the RFRU limiter 138 can be included in an electronic engine controller (EEC), which can be a full authority digital engine control (FADEC) or a non-FADEC single channel engine control. Also, in some embodiments, the RFRU limiter 138 can connect to and receive inputs from one or more sensors that measure the $Wf$, P3, speed, and power of the gas turbine engine.

Although FIG. 1 illustrates one example of an aircraft 100 supporting a relative fuel ratio unit limiter for gas turbine surge recovery, various changes may be made to FIG. 1. For example, as noted above, the form of the aircraft 100 and the positions of the engines 102a-102b on the aircraft 100 can vary depending on the implementation. Also, the aircraft 100 may include more than two engines, such as two or more engines on one side of the aircraft 100 and two or more engines on the opposite side of the aircraft 100. In those cases, the techniques described in this disclosure may be applied to pairs of engines, where each pair includes an engine in one position on one side of the aircraft 100 and an engine in the same position on the opposite side of the aircraft 100.

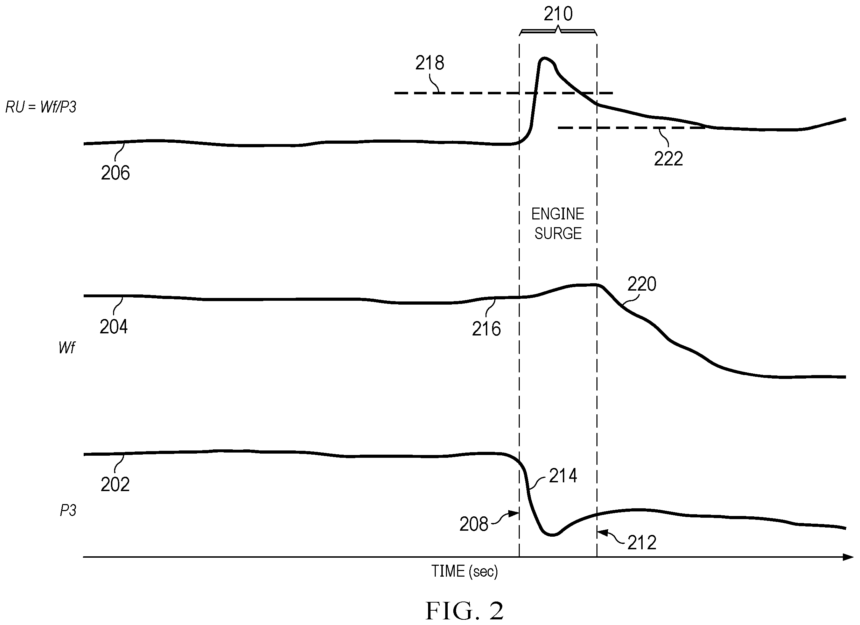

FIG. 2 illustrates compressor discharge pressure $(P3)$ 202, fuel flow ($Wf$) 204, and corresponding fuel ratio unit (RU) 206 monitored during operation of a gas turbine engine that performs a typical engine response during an engine surge according to previous RU surge recovery methods. Previous engines surge recovery logics consist in defining a maximum RU limit (typically as a function of altitude, airspeed, ambient temperature, and engine speed and/or engine power) that is set slightly greater than the engine surge line expressed in RU, with the objective not to interfere with nominal engine controls. If the engine surges, RU increases above the nominal RU limit, and then in response to this condition, the controls will reduce $Wf$ to limit the RU to the RU limiter value. Reducing fuel flow during a surge reduces back pressure to help the compressor recover. Other previous engines surge recovery logics in some FADEC engines detect a surge (based on a speed derivative or P3 derivate criteria) and scale down (or select an alternate lower) the maximum RU limit during the surge.

An electronic engine controller (EEC) controls the gas turbine engine and monitors the $P3$ 202, the $Wf$ 204, and corresponding RU 206. The EEC can generate the graphs shown in FIG. 2. The gas turbine engine can operate in steady state prior to experiencing an engine surge. For example, the $P3$ and $Wf$ change by negligible amounts during the steady state operation.

The EEC determines a surge detection time ($T$) 208, which is the start of an engine surge 210. Also, the EEC determines a surge recovery time ($T_{Recovery}$) 212, which is the end of the engine surge 210. The EEC can include an engine surge detection module (such as logic) configured to determine whether the gas turbine engine is currently experiencing an engine surge (such as the engine surge 210) based on the RU 206. The engine surge detection module can generate and output a determination result that the engine surge 210 continues or is on-going at a current time, when the gas turbine engine is experiencing an engine surge. The engine surge detection module can output a determination result that the engine surge 210 is no longer detected at a current time. For example, engine surge detection module can detect engine surge or determine that engine surge is on-going based on the slope of P3 (versus time) reaching a threshold negative value. Also, the engine surge detection module can determine that the engine surge is no longer detected based on the slope of P3 (versus time) reaching a threshold positive value.

A typical engine response during the engine surge 210 is shown by the P3 202, *Wf* 204, and RU 206. Particularly, compressor flow breakdown is shown by the rapid reduction 214 (for example, drop) of the P3 202, and the *Wf* 204 increases to compensate. Sudden rapid reduction 214 of the P3 202 causes the compressor of the gas turbine engine to not be able to compress air. The EEC is configured to maintain a reference power or a reference thrust, and thus, the EEC controls a fuel flow increase 216 as the response to the rapid reduction 214 of P3. A reduction of the P3 causes both engine power and engine speed to decrease, which is an undesirable condition. As a result of the drop of the P3 202 and increase of the *Wf* 204 for compensation, the RU 206 increases during an engine surge.

The typical engine response during the engine surge 210 includes execution of previous RU surge recovery methods, which use a fixed limit value 218 for surge recovery. The fixed limit value 218 for surge recovery is an upper threshold at which the EEC, executing the previous RU surge recovery methods, commences a reduction 220 of fuel flow in order to reduce back pressure to return to normal state of back pressure. For example, the EEC can target a surge unit 222 as a value for the RU to reach after the surge recovery time 212 at which the engine surge ends.

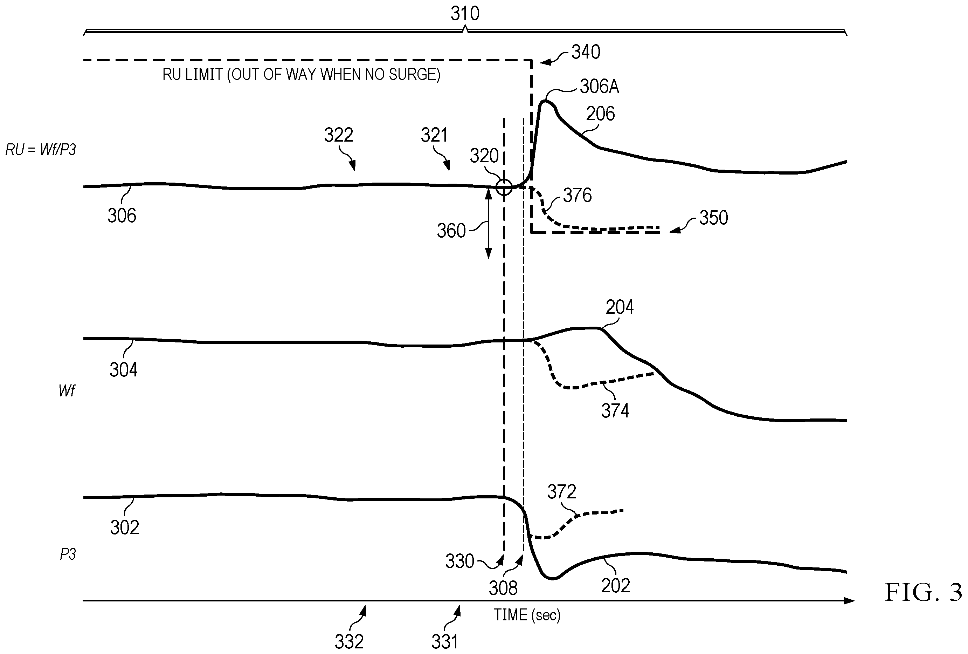

FIG. 3 illustrates compressor discharge pressure 302, fuel flow 304, and corresponding fuel ratio units 306 monitored during operation of a gas turbine engine that includes a relative fuel ratio unit limiter 138 (of FIG. 1) for gas turbine surge recovery during an engine surge according to embodiments of this disclosure.

The compressor discharge pressure 302 and fuel flow 304 can be measured by sensors, such as pressure sensors at station 3 of the compressor and Wf fuel flow meter (or fuel flow sensor). The Wf measured by fuel flow meter measures fuel flowing into the combustion chamber. In some embodiments, instead of directly measuring P3 302 and *Wf* 304 using sensors, theses P3 and *Wf* values can be synthetized by an on-board model, such as an on-board model of the gas turbine engine.

The RFRU limiter 138 interacts with other modules of the EEC, such as interacting with an engine surge detection module that detects an engine surge and determines the corresponding surge detection time (T) 308 at which the engine surge started. For example, the engine surge detection module can be part of a FADEC that detects an engine surge based on a speed derivative (such as slope of speed versus time graph; or an acceleration sensor measurement) or based on a P3 derivate (such as slope or rate of change of the P3) less than a specified threshold criterion for a specified amount of time. Additionally, the RFRU limiter 138 records, within a memory or buffer associated with the EEC, the RU 306 monitored over a recent period of time 310. For example, the EEC keeps or stores some prior/historical values of RU in memory to retrieve, at a posteriori time, the stored historical values of RU.

The RFRU limiter 138 retrieves, from the memory or buffer associated with the EEC, a pre-surge RU ($RU_{PreSurge}$) 320 before the surge detection time 308. The $RU_{PreSurge}$ 320 corresponds to a pre-surge time ($T_{PreSurge}$) 330, which is the time at which the $RU_{PreSurge}$ 320 was measured. The RFRU limiter 138 selects a pre-surge time 330 that is prior to the surge detection time 308, for example, the $T_{PreSurge}$ 330 can be selected as 1 second beforehand as shown in Equation 3.

$$T_{PreSurge} = T\text{-}1 \tag{2}$$

The RFRU limiter 138 for surge recovery includes an RU limiter to generally control the compressor discharge pressure 302 and fuel flow 304 by applying an RU limit, and particularly to reduce fuel flow 304 during an engine surge. The RU limit includes a nominal RU limit 340 that is applied when no surge is detected, and the RU limit includes a relative RU limit 350 that is applied during an engine surge. The nominal RU limit 340 is out of the way in order to prevent the EEC from detecting a surge due to steady state operations at RU levels much greater than during the recent period of time 310, as such, the nominal RU limit 340 is greater than the peak 306a of the monitored RU 306 during the surge. The RFRU limiter 138 keeps the relative RU limit 350 in a deactivated/disabled state while no engine surge is detected and until the point at which surge is detected, and then activate/enables at the surge detection time 308.

As a technical advantage, and as an improvement beyond previous RU surge recovery methods, the RFRU limiter 138 enables or applies the relative RU limit 350 during the engine surge and sets the relative RU limit 350 at a value that is less than the pre-surge RU 320 by at least a bias value 360. The bias value is denoted as *X*. As shown in Equation 3, the relative RU limit 350 is determined as or set at a value that is a relative bias value 360 less than the engine measured RU 350 just before the surge was detected.

$$\text{Relative RU limit} = RU_{PreSurge} - X \tag{3}$$

In some embodiments, the bias value 360 is a fixed value, for example, a predetermined value set in or programmed within in software of the RFRU limiter 138. In some embodiments, $RU_{PreSurge}$ includes a rolling average of multiple samples of the pre-surge RUs 320-322 that respectively correspond to multiple pre-surge times 330-232 before the surge detection time. The multiple samples of the pre-surge RUs 320-322 can be retrieved from the memory on a rolling basis, such as according to a sliding window of time, and an average of the multiple samples of the pre-surge RUs 320-322 retrieved for the sliding window of time can be calculated as the value of $RU_{PreSurge}$.

As another technical advantage, the RFRU limiter 138 reduces the engine fuel flow to allow the engine to recover from the surge, for example, by limiting the fuel flow based on the relative RU limit 350 for a duration of the detected engine surge. Accordingly, the RFRU limiter 138 causes a gas turbine engine to perform an improved engine response during an engine surge, as shown by measurements of the improved compressor discharge pressure (P3) 372, improved fuel flow (Wf) 374, and corresponding improved RU 376 monitored during and after the engine surge that started at the surge detection time 308. As a comparison, the graphs of the improved P3 372, Wf 374, and RU 376 shown in FIG. 3 are overlaid the graphs of the typical engine response (of FIG. 2) shown as the P3 202, the Wf 204, and corresponding RU 206.

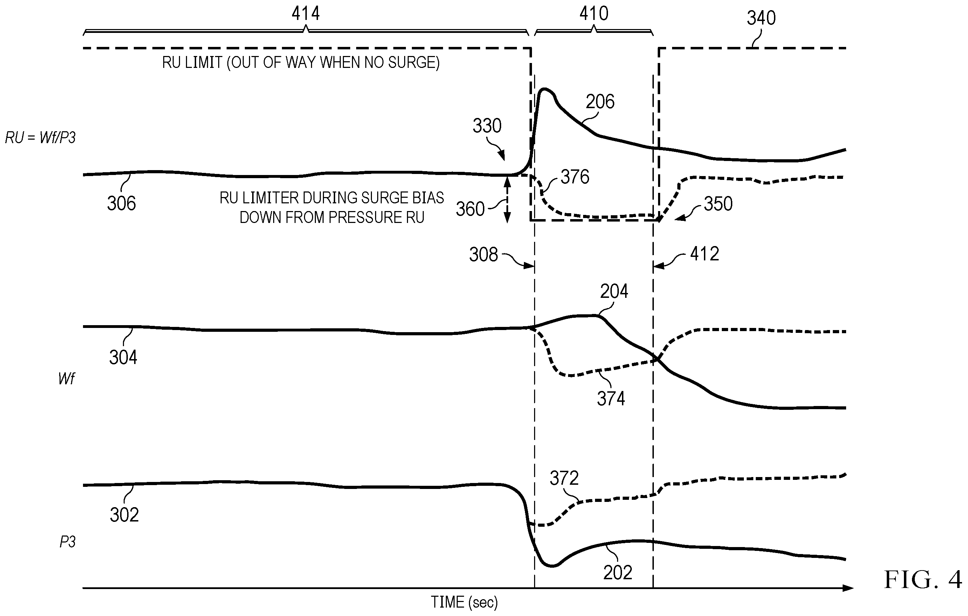

FIG. 4 illustrates disabling the relative RU limit 350 after a duration 410 of time according to embodiments of this disclosure. The components 202, 204, 206 shown in FIG. 4 are the same as shown in FIG. 2; and the components 302, 304, 306, 308, 340, 330, 350, 360, 372, 374, and 376 shown in FIG. 4 are the same as shown in FIG. 3.

In some embodiments, the RFRU limiter 138 determines to disable the relative RU limit 350 (thereby switching to instead apply the nominal RU limit 340) based on (for example, in response to) identifying that the engine surge detection module reset the surge detection algorithm. The surge detection algorithm can be reset based on criteria for resetting or by expiry of a timer. For example, the duration 410 can be a duration of the detected engine surge that started at the surge detection time 308, and the end of the duration 410 can be referred to as the surge recovery time 412 when the engine surge is no longer detected. In some embodiments, the duration 410 can be an expected surge recovery duration following the surge detection time 308, such as a specified time that elapsed after the surge was first detected. The expected surge recovery duration can be an average duration of an engine surge, such as the typical engine surge 410.

As shown in FIG. 4, the RU limit can be moved back out of the way once the surge is no longer detected. That is, at the surge recovery time 412 when the engine surge is no longer detected, the RFRU limiter 138 disables the relative RU limit 350 and re-enables/re-applies the nominal RU limit 340 while the relative RU limit 350 is disabled. The nominal RU limit 340 is applied during a time period 414 when no surge is detected, for example, a time period of steady-state operations of the gas turbine engine.

In some embodiments, to limit the fuel flow based on the relative RU limit, the relative RU limit 350 is redetermined based on the pre-surge RU 320 and a second bias value ($X_2$), in response to a determination that the engine surge continues after and expected surge recovery duration following the surge detection time. The redetermined relative RU limit is less than the pre-surge RU by at least the second bias value. For example, the bias value can change from a first bias value ($X_1$) to the $X_2$, which is different from the $X_1$.

In some embodiments, the bias value may be applied multiples times if surge recovery is not detected within a given amount of time (for example, reapply the bias value on the RU limiter every second that a surge is still detected). Also, in some embodiments, the bias value 360 that is used to define the relative RU limit 350 could be a function of any relevant inputs (such as altitude/temperature) and/or of specific engine operating conditions (such as starting, low-power mode, high-power mode). Further, in some embodiments, the bias value 360 could be a function of a surge severity (for example derived from the P3 negative derivative value reached), where more bias would be applied for more severe surges. Moreover, in some embodiments, instead of being 'out of the way' when an engine surge is not detected, a nominal RU limiter (similar to the previous RU recovery methods described with FIG. 2) that applies a fixed nominal RU limit 340 could be used and switched to the RFRU limiter 138 when a surge is detected (or a select-low logic could be used). In addition, in some embodiments, the relative RU limit 350 could be limited to a minimum corresponding to the steady-state RU runline (such as the RU 306 during the time period 414 when no surge is detected) at the given power, to prevent reducing steady-state power during surge recovery (namely, during the duration 410 of the detected engine surge). Finally, in some embodiments, the bias value could be zero, in which case the relative RU limit 350 would be equal to the value of the pre-surge RU 320. This may still provide surge recovery since RU increases during a surge (so some fuel would be cut).

According to embodiments of this disclosure, the RFRU limiter 138 can be applied to any type of gas turbine engine (for example, turbofan, turboprop, turboshaft, etc. types of gas turbine engines) including any suitable type of gas turbine compressor aerospace, industrial, etc.

Although FIGS. 3 and 4 illustrates an example of a RFRU limiter 138, various changes may be made to FIGS. 3 and 4. For example, various components in FIGS. 3 and 4 could be combined, further subdivided, or omitted and additional components could be added according to particular needs. As a particular example, the RU pre-surge could be a single sample from before the surge or could be a rolling average of multiples samples before the surge (to reduce measurement noise). The rolling average may be a weighted average.

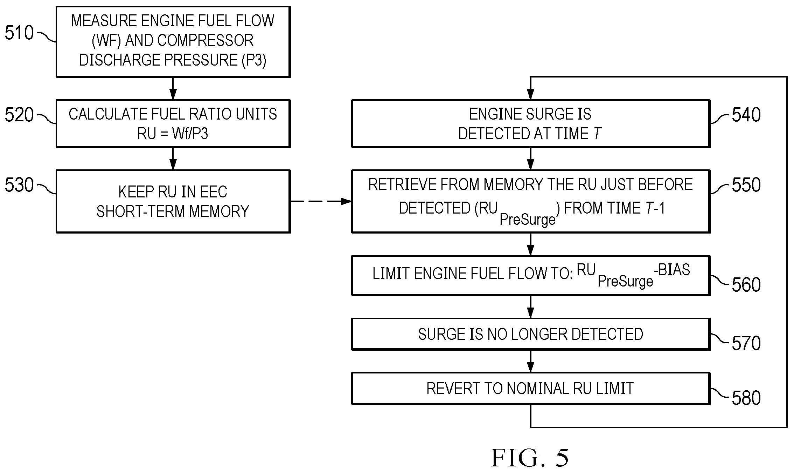

FIG. 5 illustrates a method 500 for a relative fuel ratio unit limiter for gas turbine surge recovery according to embodiments of this disclosure. The method 500 is implemented by a processing device that includes or executes functions of the RFRU limiter 138 of FIG. 1. For ease of explanation, the method 500 is described as being performed in the aircraft 100 of FIG. 1 and is performed by the RFRU limiter 138.

At block 510, the engine fuel flow *Wf* and the compressor discharge pressure P3 are measured, for example, measured by sensors associated with a gas turbine engine. At block 520, the RFRU limiter 138 calculates fuel ratio units based on the *Wf* and *P3* measured during operation (or synthesized during a simulated operation) of the of the gas turbine engine. More particularly, the RFRU limiter 138 monitors the RU that is calculated. At block 530, the RFRU limiter 138 records, in a memory (such as storage device or a short-term memory), the monitored RU over a recent period of time 310.

At blocks 540 and 550, the RFRU limiter 138, in response to identifying a surge detection time 308 at which an engine surge is detected, retrieves, from the memory, a pre-surge RU 320 before the surge detection time 308. The pre-surge RU 320 corresponds to a pre-surge time 330. More particularly, at block 540, the RFRU limiter 138 identifies the surge detection time 308. To identify the surge detection time 308, the RFRU limiter 138 can obtain a determination result that the engine surge 410 continues or is on-going at a current time. Obtaining the determination result can include receiving the determination result output from an engine surge detection module or accessing the engine surge detection module to read the determination result.

At block 550, the RFRU limiter 138 retrieves, from the memory, a pre-surge RU 320 before the surge detection time 308. By selecting the pre-surge time 330, the RFRU limiter 138 selects the corresponding pre-surge RU 320. An arrow from block 530 to block 550, as shown in FIG. 5, illustrates that the pre-surge RU 320 at the selected previous point in time (pre-surge time 330) is accessed/read or retrieved from historical values of RU stored the memory.

At block 560, the RFRU limiter 138 determines a relative RU limit 350 that is based on the pre-surge RU 320, such that the relative RU limit 350 is less than the pre-surge RU 320 by at least a bias value 360. In some embodiments, to determine the bias value 360, the RFRU limiter 138 assigns a severity to the engine surge based on a rate of change (for example, derivative) of the RU 306 monitored. Assigning a severity of engine surge to the engine surge, includes assigning, as the severity, a lesser severity based on a lower rate of change of the monitored RU or assigning, as the severity, a greater severity based on a higher rate of change of the monitored RU. The bias value 360 can be a function of the assigned severity such that the bias value 360 increases with the greater severity and decreases with the lesser severity. Further, at block 560, the RFRU limiter 138 limits the fuel flow to the relative RU limit 350 for a duration 410 of the detected engine surge. In some embodiments, the RFRU limiter 138 enables (at block 540) the relative RU limit 350 for the duration 410 of the detected engine surge, for example, based on the detected surge detection time 308. While the relative RU limit 350 is enabled, the RFRU limiter 138 limits the fuel flow to the relative RU limit that is based on the pre-surge RU 320.

At blocks 570 and 580, the RFRU limiter 138 disables the relative RU limit 350 when the engine surge is no longer detected, at a surge recovery time 412. At block 570, the RFRU limiter 138 identifies that the engine surge is no longer detected, at a surge recovery time 412. For example, the RFRU limiter 138 obtains (for example, from the engine surge detection module) a determination result that the engine surge 410 is no longer detected at a current time. At block 580, the RFRU limiter 138 limits the fuel flow to a nominal RU limit 340 while the relative RU limit 350 is disabled, as shown by the improved fuel flow 374. That is, the RFRU limiter 138 reverts or switches the RU limit parameter from the value of the relative RU limit 350 to the value of the nominal RU limit 340. After the engine surge is no longer detected, the method 500 ends or returns to block 540 to reset.

An advantage of this relative RU surge recovery method 500 is that the method 500 will produce a consistent RU reduction (and thus surge recovery behavior) between different engines and different operating conditions. A problem of the previous RU recovery methods described with FIG. 2 is that to use fixed RU values for surge recovery, there is the need to account for stack-up margin from the P3 sensor accuracy, the fuel meting unit (FMU) *Wf* accuracy, the engine-to-engine RU running line variability, the amount of possible customer bleed and electrical load (that affects engine RU runline as well). The stack-up (for example, combination) of all these factors (and combinations for inaccuracies) can result in a difference of up to 25% in RU. The 25% difference in the RU must be accounted in the RU Limiter definition stack-up (for example, the nominal RU limit 340 of FIG. 3) to prevent the nominal RU limit from interfering in a non-surge condition. Accordingly, surge recovery behavior between two different engines may be very different. The method 500 for operating the relative fuel ratio unit limiter for gas turbine surge recovery according to embodiments of this disclosure, removes all these stack-up inaccuracies.

Because of this advantage, this method 500 will also work particularly better to reduce *Wf* during a surge at very low power (such as during a start mode), where the stack-up inaccuracies are typically the highest and where the EEC cannot afford to remove much fuel (for example, by reducing *Wf*), at the risk of the surge recovery causing a flameout or a hung start. For this reason, another problem of the previous RU recovery methods described with FIG. 2 (including logics with fixed RU limits that are not calculated based on the measured RU 206 or 306 performance of the gas turbine engine on which the methods are executed) is that such previous methods are sometimes de-activated during start mode.

Although FIG. 5 illustrates an example method 500 for operating the relative fuel ratio unit limiter for gas turbine surge recovery, various changes may be made to FIG. 5. For example, while shown as a series of steps, various steps in FIG. 5 could overlap, occur in parallel, occur in a different order, or occur any number of times.

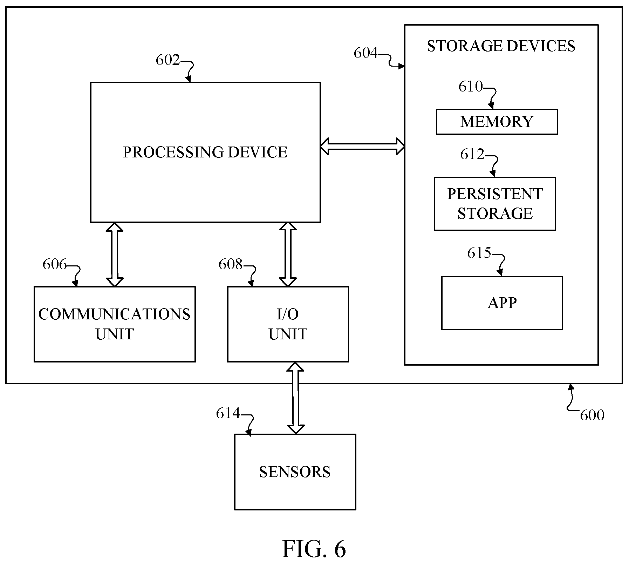

As shown in FIG. 6, the computing device or system 600 may include at least one processing device 602, at least one optional storage device 604, at least one communications unit 606, and at least one optional input/output (I/O) unit 608. The processing device 602 may execute instructions that can be loaded into a memory 610 or other location that is local to the processing device 602. The processing device 602 includes any suitable number(s) and type(s) of processors or other processing devices in any suitable arrangement. Example types of processing devices 602 include one or more microprocessors, microcontrollers, digital signal processors (DSPs), ASICs, FPGAs, or discrete circuitry.

The memory 610 and a persistent storage 612 are examples of storage devices 604, which represent any structure(s) capable of storing and facilitating retrieval of information (such as data, program code, and/or other suitable information on a temporary or permanent basis). The memory 610 may represent a random access memory or any other suitable volatile or non-volatile storage device(s). The persistent storage 612 may contain one or more components or devices supporting longer-term storage of data, such as a read only memory, hard drive, Flash memory, or optical disc.

The communications unit 606 supports communications with other systems or devices. The communications unit 606 may support communications through any suitable physical or wireless communication link(s), such as a network or dedicated connection(s).

The I/O unit 608 allows for input and output of data. For example, the I/O unit 608 may provide a connection for user input through a keyboard, mouse, keypad, touchscreen, or other suitable input device. The I/O unit 608 may also send output to a display or other suitable output device. Note, however, that the I/O unit 608 may be omitted if the device or system 600 does not require local I/O, such as when the device or system 600 represents a server or other component that can be accessed remotely over a network.

Although FIG. 6 illustrates one example of a computing device or system 600 supporting a relative fuel ratio unit limiter for gas turbine surge recovery according to this disclosure, various changes may be made to FIG. 6. For example, computing devices and systems come in a wide variety of configurations, and FIG. 6 does not limit the relative fuel ratio unit limiter for gas turbine surge recovery to any particular computing device or system. For example, the computing device or system 600 can be an electronic engine controller (EEC), which can be a FADEC or a non-FADEC single channel engine controller. As another example, the I/O unit 408 can connect to external devices (external to the computing device or system 600), such as sensors 614 that measure the *Wf,* P3, speed, and power of the gas turbine engine. As yet another example, the storage device 404 can store an application 415 that can be the RFRU limiter 138 of FIG. 1 as described in this disclosure. The application 415, when executed, enables the device or system 600 to perform the functions of the RFRU limiter 138 as described in this disclosure.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive (HDD), a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

**Claims**

1. A method comprising:

   monitoring a fuel ratio unit (RU) of a gas turbine engine (102a, 102b) over time, wherein the RU (306) is a ratio of a fuel flow (304) to a compressor discharge pressure (302) during operation of the gas turbine engine (102a, 102b);
   storing the RU (306) in a memory;
   in response to identifying a surge detection time (308) at which an engine surge is detected, retrieving, from the memory, a pre-surge RU (320) before the surge detection time (308), wherein the pre-surge RU (320) corresponds to a pre-surge time (330);
   determining a relative RU limit (350) based on the pre-surge RU (320) such that the relative RU limit (350) is less than the pre-surge RU (320) by at least a bias value (360); and
   limiting the fuel flow (304) to the relative RU limit (350) for a duration (410) of the detected engine surge.

2. The method of Claim 1, further comprising:

   retrieving multiple samples of pre-surge RUs (320) that respectively correspond to multiple pre-surge times (330) before the surge detection time (308);
   calculating, as the pre-surge RU (320), a rolling average of the multiple samples of the pre-surge RUs (320).

3. The method of Claim 1 or 2, further comprising:

   redetermining the relative RU limit (350) based on the pre-surge RU (320) and a second bias value in response to a determination that the engine surge continues after an expected surge recovery duration following the surge detection time (308);
   wherein the redetermined relative RU limit (350) is less than the pre-surge RU (320) by at least the second bias value.

4. The method of Claim 1, 2 or 3, further comprising:

   assigning a severity of engine surge to the engine surge based on a rate of change of the monitored RU (306) such that the severity of engine surge is a lesser severity based on a lower rate of change of the monitored RU (306) or a greater severity based on a higher rate of change of the monitored RU (306);
   wherein the bias value (360) is a function of the assigned severity that increases with the greater severity.

5. The method of any preceding claim, further comprising:

   enabling the relative RU limit (350) for the duration (410) of the detected engine surge;
   while the relative RU limit (350) is enabled, limiting the fuel flow (304) to the relative RU limit (350) based on the pre-surge RU (320);
   disabling the relative RU limit (350) when the engine surge is no longer detected; and
   limiting the fuel flow (304) to a nominal RU limit (340) while the relative RU limit (350) is disabled.

6. The method of Claim 5, further comprising:

   selecting an upper limit of the nominal RU limit (340) from among a first upper limit and a second upper limit different from the first upper limit;
   wherein the first upper limit is based on the gas turbine engine (102a, 102b);
   wherein the second upper limit is compatible with and based on multiple gas turbine engines (102a, 102b) including different types of gas turbine compressors; and
   wherein the different types of gas turbine compressors include at least one from among axial compressor, centrifugal compressor, and mixed-flow compressor.

7. The method of any preceding claim, further comprising:

> determining, based on the monitored RU (306), a steady-state RU corresponding to a steady-state power output from the gas turbine engine (102a, 102b); and
> applying a lower limit to the relative RU limit (350);
> wherein the lower limit includes the steady-state RU, thereby preventing the gas turbine engine (102a, 102b) from reducing power output below the steady-state power for the duration (410) of the detected engine surge.

8. The method of any preceding claim, wherein the fuel flow (304) and the compressor discharge pressure (302) are measured by sensors during operation of the gas turbine engine (102a, 102b).

9. The method of any of Claims 1 to 7, wherein the fuel flow (304) and the compressor discharge pressure (302) include synthesized values from simulated operation of an on-board model of the gas turbine engine (102a, 102b).

10. The method of any preceding claim, wherein:

> the bias value (360) is a function of at least one of: an environment measurement or an engine (102a; 102b) operating condition;
> the environment measurement includes at least one of: altitude, airspeed, or ambient temperature;
> the engine (102a; 102b) operating condition includes at least one of: starting mode, low-power mode, or high-power mode; and
> the bias value (360) is selected from a look-up table that includes multiple bias values corresponding to predetermined values of the environment measurement and the engine (102a; 102b) operating condition.

11. The method of any of claims 1 to 9, wherein the bias value (360) is zero such that the relative RU limit (350) is equivalent to the pre-surge RU (320).

12. The method of any preceding claim, wherein:

> an electronic engine controller (EEC) (600) of the gas turbine engine (102a, 102b) monitors the RU (306), stores the RU (306) in the memory, retrieves the pre-surge RU (320) from the memory, determines the relative RU limit (350), and limits the fuel flow (304) to the relative RU limit (350); and
> the EEC (600) includes at least one of:
>
>> a full authority digital engine controller (FADEC); or
>> a non-FADEC single channel engine controller.

13. A non-transitory machine-readable medium (604) including instructions that when executed cause at least one processor (620) to carry out the method steps of any of claims 1 to 11.

14. An electronic device (600) comprising:

> a memory (610); and
> at least one processor (620) configured to carry out the method steps of any of claims 1 to 11.

EP 4 682 367 A1

FIG. 1

12

FIG. 2

FIG. 3

EP 4 682 367 A1

FIG. 4

EP 4 682 367 A1

EP 4 682 367 A1

510 — MEASURE ENGINE FUEL FLOW (WF) AND COMPRESSOR DISCHARGE PRESSURE (P3)

520 — CALCULATE FUEL RATIO UNITS RU = Wf/P3

530 — KEEP RU IN EEC SHORT-TERM MEMORY

540 — ENGINE SURGE IS DETECTED AT TIME $T$

550 — RETRIEVE FROM MEMORY THE RU JUST BEFORE DETECTED ($RU_{PreSurge}$) FROM TIME $T$-1

560 — LIMIT ENGINE FUEL FLOW TO: $RU_{PreSurge}$-BIAS

570 — SURGE IS NO LONGER DETECTED

580 — REVERT TO NOMINAL RU LIMIT

FIG. 5

FIG. 6

STORAGE DEVICES 604

MEMORY 610

PERSISTENT STORAGE 612

APP 615

PROCESSING DEVICE 602

COMMUNICATIONS UNIT 606

I/O UNIT 608

SENSORS 614

600

Europäisches
Patentamt

European
Patent Office

Office européen
des brevets

## EUROPEAN SEARCH REPORT

**Application Number**

EP 25 18 9735

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 4 470 118 A (MORRISON TERRY [US]) 4 September 1984 (1984-09-04) * column 4, line 36 - line 51 * * pages -; figures * ----- | 1-14 | INV. F02C9/28 F02C9/46 |
| A | EP 3 199 784 A1 (ROLLS ROYCE PLC [GB]) 2 August 2017 (2017-08-02) * claim 1; figures 7,8 * ----- | 1-14 | |
| A | US 4 000 607 A (BOLLIGER FREDERIC E) 4 January 1977 (1977-01-04) * column 5, line 62 - line 68 * ----- | 1-14 | |
| | | | **TECHNICAL FIELDS SEARCHED (IPC)** F02C |

The present search report has been drawn up for all claims

| Place of search | Date of completion of the search | Examiner |
|---|---|---|
| The Hague | 27 November 2025 | Angelucci, Stefano |

EPO FORM 1503 03.82 (P04C01)

## ANNEX TO THE EUROPEAN SEARCH REPORT
## ON EUROPEAN PATENT APPLICATION NO.

EP 25 18 9735

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2025

| Patent document cited in search report | | Publication date | Patent family member(s) | | Publication date |
|---|---|---|---|---|---|
| US 4470118 | A | 04-09-1984 | CA | 1193694 A | 17-09-1985 |
| | | | EP | 0092425 A1 | 26-10-1983 |
| | | | US | 4470118 A | 04-09-1984 |
| EP 3199784 | A1 | 02-08-2017 | EP | 3199784 A1 | 02-08-2017 |
| | | | US | 2017211486 A1 | 27-07-2017 |
| | | | US | 2020191065 A1 | 18-06-2020 |
| US 4000607 | A | 04-01-1977 | DE | 2648768 A1 | 18-05-1977 |
| | | | FR | 2331086 A1 | 03-06-1977 |
| | | | GB | 1545235 A | 02-05-1979 |
| | | | US | 4000607 A | 04-01-1977 |

EPO FORM P0459

For more details about this annex : see Official Journal of the European Patent Office, No. 12/82